# EUROPEAN PATENT SPECIFICATION

(11) **EP 1 874 523 B1**
(45) Date of publication and mention of the grant of the patent: **11.02.2009**
(21) Application number: 06725691.7
(22) Date of filing: 10.04.2006
(51) Int. Cl.: B29C 47/70, B29C 47/28, B29C 47/14, B29C 47/92, B29C 47/04

(54) **METHOD AND APPARATUS FOR FILM EXTRUSION**
VERFAHREN UND VORRICHTUNG ZUR FOLIENEXTRUSION
PROCEDE ET APPAREIL D'EXTRUSION DE FILMS

(30) Priority: 08.04.2005 GB 0507173; 06.06.2005 GB 0511504; 08.02.2006 GB 0602550
(43) Date of publication of application: 09.01.2008
(73) Proprietor: Rasmussen, Ole-Bendt, 6318 Walchwil (CH)
(72) Inventor: Rasmussen, Ole-Bendt, 6318 Walchwil (CH)
(74) Representative: Jones, Helen M.M.
(86) International application number: PCT/EP2006/061496
(87) International publication number: WO 2006/106151

(56) References cited:
- EP-A- 0 039 041
- EP-A- 0 692 363
- EP-A- 1 186 397
- US-A- 3 343 215
- US-A- 3 965 931
- US-A- 4 063 865

## Description

The invention concerns method and apparatus for mono- or co-extrusion of flat or tubular film from thermoplastic polymer material. In particular it concerns simplified but improved means for equalisation of the lateral distribution of the flow velocity achieved in combination with elimination in full or in part of the die-lines which always will be formed at the interfaces where part-flows have joined each other.

The invention is most advantageous in connection with mono- or coextrusion of tubular film from annular dies where the equalisation and die-line elimination cause most problems, especially when the extruded material has particular high molecular weight as for instance in the case of HMWHDPE or blends which contain HMWHDPE as a major component.

Furthermore, the present invention has the special advantage that it permits coextrusion of tubular film with use of a feed block, that means two or more components are first coextruded to form a common flow in which each component constitutes one or more layers, and this common flow is then in the extrusion die converted to a tubular flow, still consisting of the same layers. While coextrusion with use of a feed block is the most used method of coextrusion in connection with flat dies, a similar method has never - to the knowledge of the inventor - been developed for manufacture of coextruded tubular film from an annular die. The solution of this problem is a special objective of the present invention.

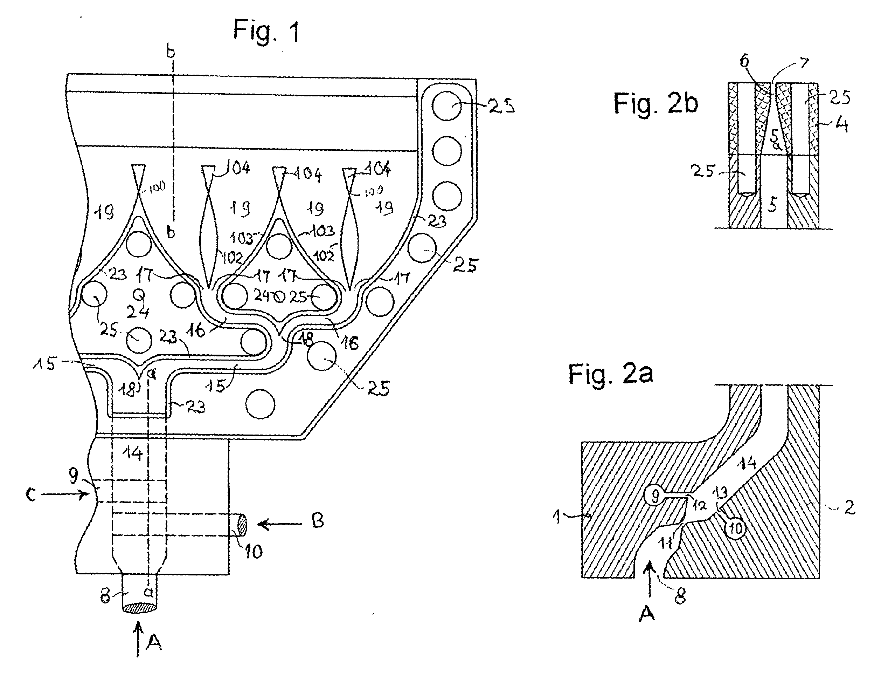

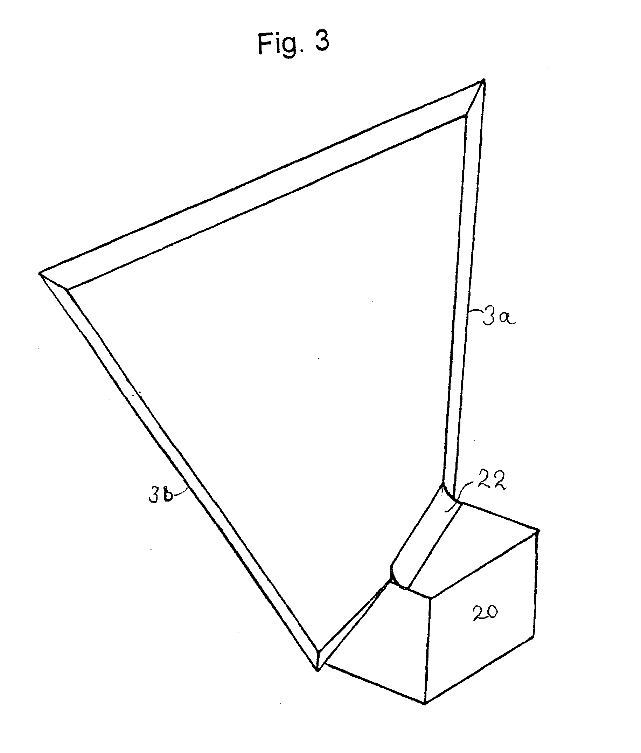

Today there exist two commercially applied basically different methods of carrying out the equalisation and part-elimination of the die-lines in film from annular extrusion dies. Both are described in US-A-4403934 (Rasmussen) and US-A-4492549 (continuation of the former). In one method, illustrated in figs. 2 and 3 of the two patents, the flow is first divided on a number of part-flows, each conducted through a channel which ends helically (spiral formed). There is overflow between the individual spirals, and each becomes narrower and narrower towards its downstream end, where it disappears so that the spacing becomes even over the full circumference. Following the spiral system the flow exits through an orifice and enters a circular collecting chamber where it meets other equalised components. (The said patents concern coextrusion, but of course the equalisation procedure is also applicable to monoextrusion).

The equalisation and a shearing out of die-lines take place while the flowing material partly follows the spiral channels and partly performs an overflow between these channels.

In the above mentioned two patents, the dividing out of one flow to form a number of part-flows takes place by a circumferential fed and circumferentially arranged channel system. This means that, from an inlet the flow divides on two equal circumferential branches, each of which similarly divides on two equal, circumferential branches, etc. A similar dividing system is known from flat dies, see DE-A-4133394, US-A-4017240, US-A-3825645, US-A-2734224, DE-B-1156967 and SU-A-1393651, and from the annular die described in US-A-3343215. Such dividing system is preferable, but not necessary in the present invention (as it will appear from the following). It is noted that most annular dies today do not use such circumferential feeding and dividing, but use a "mushroom" channel system which begins at or near the axis of the die and from there divides out in a stepwise manner.

No matter how the dividing on part-flows takes place, the spiral distribution system suffers from several drawbacks, especially when high molecular weight polymer material is extruded. One drawback is that the performance of the spiral channels which overflow critically depends on the rheology of the material at the temperature and throughput which is applied, and therefore it is not possible to make a universal design applicable to significantly different rheologies.

In the case of high molecular weight polymers the inventor has found it is a special problem that the elastic properties of the molten material causes the pressure to be direction-dependent, thereby resisting the intended flow along the spirals, unless the angle between the spirals and the die-axis is made relatively low, at least at the beginning of the spirals. This will make the spiral section of the die relatively long, tending to make it too heavy and the dwell time of the polymer material too long. Furthermore the throughput will be relatively low due to a high resistance to the flow. Also in case of polymer material having less elastic character in the molten state, the relatively high resistance in the spiral section of the die is a negative factor.

In connection with spiral dies, coextrusion with a use of a feed-block is not possible, since the spirals with overflow would disturb the layered structure.

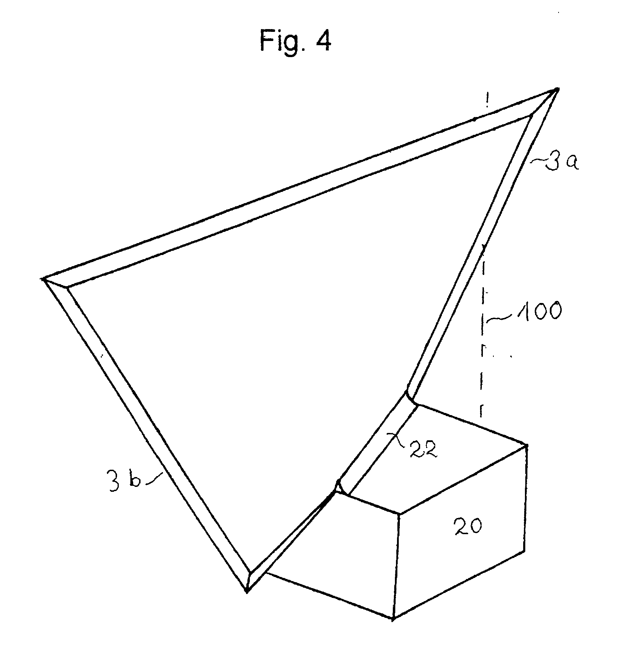

The above-mentioned US-A-4403934 and US-A-4492549 also propose an alternative method of equalising the tubular flow and part-eliminate the die-lines, namely by means of a relative rotation between the two annular die-parts which form the exit orifice (see fig. 4 of the two patents). However, this solution is mechanically relatively complicated, a reason why it has not been industrially developed until very recently. For similar reason it requires frequent maintenance. A further drawback is that the relative rotation between the lips which form the exit orifice, has a negative effect on the stability of the bubble of molten tubular material which leaves the die while it is blown and drawn down.

In the commercial manufacture of flat film there is normally used either a "coat-hanger" or "fish-tail" die in which no dividing into part-flows takes place. The coat-hanger die widens within a relatively short chamber from a relatively small to a relatively large width, and to cope with this change the details of the design is normally taylor-made to the rheology of the polymer material for which the die is made. Fine adjustment of the equalisation is achieved by closely spaced adjustment screws which can adjust the spacing of the exit orifice from location to location.

In the fish-tail die the widening takes place gradually with less need for adjustments, but the die width that is obtainable is much smaller.

The coat-hanger and fish-tail dies are suited for coextrusion with use of a feed-block, but due to the abrupt widening in the coat-hanger die, the relative thickness of the different layers can significantly vary over the width unless the rheologies of the different coextruded materials are close to each other, especially when one of the layers consists of HMWHDPE or other material with pronounced elastic properties in the applied molten state.

In the above mentioned publications DE-A-4133394, US-A-4017240, US-A-3825645, US-A-2734224, DE-B-1156967 and SU-A-1393651, each pair of adjacent part-streams widen out in a fish-tail manner and join over the edge of a wedge-formed chamber wall. These edges have the same distance from the die exit, and the throughput of the different part-streams are even. Following the joining of the part-streams the entire flow is laterally equalised in a sufficiently wide collection chamber. In each of these patents, the applied apparatus will cause formation of significant die-lines, which will show optically, and will cause large losses of raw materials by change between two colours, or from uncoloured to coloured, or *vice versa.* DE-A-4133394 and US-A-4017240 improve on this by, so to say, dividing each die-line into two less significant ones, however the result of these improvements will be very inferior to the result of a spiral distribution.

The present invention overcomes the draw-backs of the above mentioned known methods for equalisation and full or part elimination of die-lines in a simple but surprisingly efficient manner. Briefly explained, the method consists in dividing the flow into a sufficiently large number of part-flows and uniting each pair of neighbouring part-flows over an edge of the die-wall which has separated these flows, whereby an essential feature is that these edges or connected vanes are slanted so that each die-line will become extended over a significant width, enough practically speaking to eliminate its effect. Another essential feature is that a collecting chamber downstream of the edges where the part-flows merge, for the sake of equalisation, must be sufficiently wide to allow a practically free transverse adjustment of the flow prior to its narrowing down towards the exit.

More precisely explained, the present invention concerns the type of extrusion in which molten thermoplastic polymer material is extruded through an extrusion die in the manufacture of a polymer film, the die having one or more inlets for one or more inlet-flows of the material and an exit orifice for a film-formed exit flow of the material, and the molten material is divided before or after the passage through the inlet or inlets into at least four part-flows. Each of these is conducted to an internal channel orifice, whereby these at least four internal orifices have the same distance from the exit. Between said internal orifices and said exit the part-flows are united and the flowing material is manipulated to equalise the flow velocity and at least partly eliminate die-lines formed at the interfaces where the part-flows meet. This manipulation comprises, immediately downstream of said internal orifices, gradually widening each part-flow until the part-flows, each in the form of a molten sheet structure, meet and merge with each other and the merging takes place over edges on the ends of die-walls which separate the part-flows from one another. These edges all have the same distance from the exit. After this the combined stream consisting of merged part-streams proceeds through a wide collecting chamber which has a gap which reduces gradually and ends in the film-forming exit orifice.

The improvement established by the present invention is characterised in that either the edges over which the part-flows join are slanted to form a lateral displacement over the length of each edge, or the joining is immediately followed by helical rotation of the molten polymer material at and adjacent to the interface between each pair of adjacent part-flows, generally around an axis through the middle of the interface, by means of thin vanes which are slanted to one side at their downstream end (3b) and either are slanted to the opposite side or are generally perpendicular to the main surfaces of the flows at their upstream end. The method of the invention is defined in claim 1, while a die for carrying out the invention is defined in claim 25.

It is noted that the term "exit orifice" does not necessarily refer to the orifice from which the material leaves the die. In the case of co-extrusion other than the co-extrusion with use of a feed-block, it will be the orifice where the flow of molten thermoplastic polymer material is co-extruded with one or more other similar flows on the route towards the final exit orifice of the die. Similar comments apply to the term "exit flow".

The slanting is preferably adapted to spread out each significant die-line generally evenly over a film width no less than about 5 mm or better no less than about 10 mm or, even better no less than about 15 mm. In this connection the die-lines formed by the chamber walls will be significant, while the means which produce helical rotation of the molten material each may produce a separate die-line (as it will appear from the following) which normally will be insignificant and therefore require less spreading.

The thickness of the part-flows when they reach the last set of slanted edges should preferably be no less than about 10 mm, more preferably no less than about 20 mm or even better no less than 25 mm. One purpose of this is to achieve a significant spreading of each die-line without excessive slanting of the edges, which can cause stagnation. Another purpose is to facilitate the equalisation of flow velocities after uniting the part-flows.

Furthermore, for the sake of good equalisation of the flow velocities, the distance between each adjacent pair of such slanted edges, measured from middle to middle, should preferably be no higher than 20 cm, more preferably no higher than 15 cm or better no higher than 10 cm. Most suitable values of the slanting are around 30 degrees.

With the short distances in mind, there should preferably be at least 8 and normally at least 16 part flows.

In the vicinity of the edges, the die-walls of the chambers which define the part-flows may be helically shaped, starting vertically with respect to the major surfaces of the sheet-formed part-flows and gradually becoming more and more slanted. In practice this is best done by manufacturing each of the corresponding chamber walls from two or more parts which are screwed or welded together.

Having regard to the practical construction of the die, the helical rotation may alternatively be effected by vanes preferably on inserts in the die each arranged immediately downstream of an end of the wall which forms the separation between the part-flows. Adjacent to the four edge-portions of each part-flow the helical shape of the die-wall or vane is preferably modified to avoid stagnation of the polymer material. Figs 3 and 4 illustrate these features.

Some polymers like e.g. LDPE are particularly prone to stagnation, where the design of the channels have sharp bends, or tend to form "pockets", while other polymers like e.g. HDPE or LLDPE are less prone to stagnation. Solutions to problems of this rheological type are matters of general design. Claims 22 and 23 deal with preferable precautions to do with rheology starting with the aim of avoiding stagnation around the slanted die-walls or the vanes which are constructed to rotate the die-lines. Further explanations are given in the description of figures 1, 2a and 2b, and optimisation of the design can be carried out on this basis by a person with average skill in polymer rheology.

As it already appears from the foregoing, the die can be a flat die which delivers the material in flat form from its exit orifice, or it can be an annular die which delivers the material in tubular form from its exit orifice.

When the die is annular, there are the following options for the geometrical arrangements of the flows immediately upstream of the slanted edges:
a) the major sheet surfaces at this flowstage can be tubular and formed around the axis of the annular die,
b) the major sheet surfaces at this flowstage can be conical and formed around the axis of the annular die, or
c) the flow at this stage can be generally radially directed.

Corresponding to these three options there are three options for the geometrical arrangement of the slanted edges.

As it already has been mentioned above, the division of the molten material into four or more part-flows preferably involves a successive dividing system between the inlet or inlets and the internal orifices. In addition to this, one or more steps of dividing may take place upstream of the extrusion die. For practical reasons the passageways for the molten component are mainly formed in the surfaces of die-plates which are clamped together, e.g. by bolts, or on cylindrical or conical surfaces of annular dieparts which fit together.

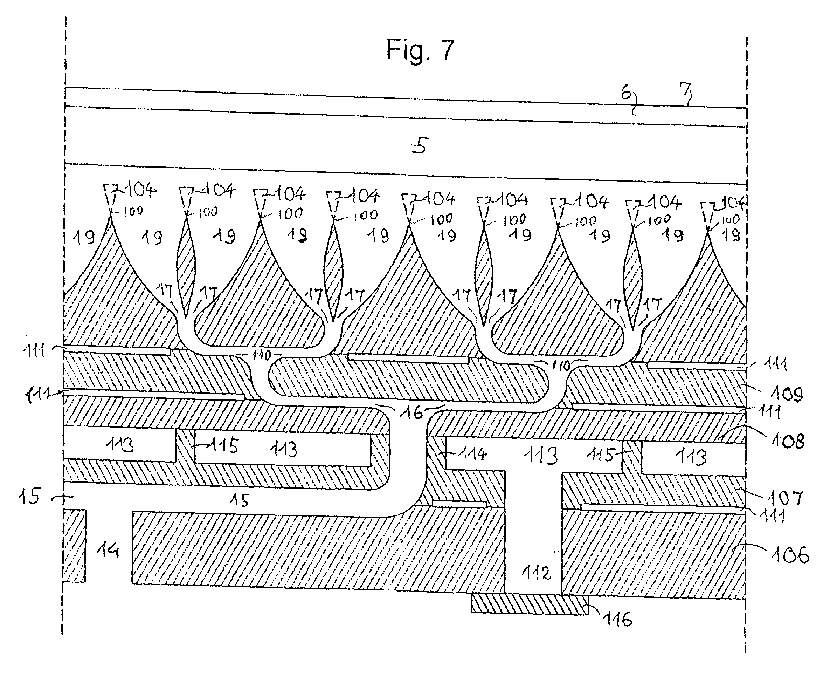

From dividing step to dividing step the flow of one component can occur between one pair of plates or conical rings with adequately formed surface grooves as shown in Fig. 4 of US-A-4403934, or there can be used separate pairs of plates or conical rings with passageways through the plates or rings as shown in figs. 2 and 3 of the same US patent. In the first mentioned case the distance from the flow to the axis of the die can either increase or decrease from step to step of the dividing. This is especially illustrated in figs. 3a and b of WO-A-01/78966 (Rasmussen). Advantageously combinations may be made of the above-mentioned systems of longitudinal passageways e.g. as disclosed in connection with figs. 7-9 of WO-A-02/051617 (Rasmussen).

The use of such dividing has several advantages. Thus the die-parts are relatively easy to manufacture and maintain, and, more importantly, for annular dies it is possible to establish a large bore around the axis of the die, hereby permitting a particular effective internal cooling of the bubble leaving the die, or special manipulations of this bubble from its inside as e.g. disclosed in WO-A-03/033241 (Rasmussen). Furthermore the die can be made particularly compact, which is advantageous for, e.g., the temperature control. Of particular importance for the present invention is that the described preferred dividing permits a simple and practical establishment of a significant number of part-flows close to each other. While four part-flows have been stated as being the minimum, there should as mentioned normally better be at least eight or 16 part-flows, and the establishment of 32 or even 64 part-flows is practically possible.

The use of circumferential dividing in annular dies also involves a problem, which however can be overcome efficiently according to the invention. When there is only one inlet to the die, which will be circumferentially fed in the case of annular dies, and when the temperature of the incoming flow is higher than the die temperature, the die will become unevenly heated by the incoming flow, and this can lead to significant gauge variations in the manufactured tubular film. An obvious solution is to find a proper balance between the die temperature and the temperature of the incoming flow, and an alternative solution (in the case of annular dies) to construct two diametrically opposed inlets for two inlet flows of one and the same material, and continue both flows in the successively dividing manner described above. However, the most practical solution is to construct the die such that there is one inlet only, and the die-part in which the material flows until (i.e. upstream of) the second step of the dividing takes place, is thermally isolated from the die-parts downstream thereof. In this connection, the thermally isolated die-part upstream of the second dividing may preferably be independently healed or cooled. The provision of these precautions, when applying the circumferential dividing, is considered also applicable e.g. when spiral distribution is used for the equalisation instead of the equalisation means which are the preferred subject of the present invention. Such an extrusion die for manufacturing tubular film consisting of one or more layers, each formed from a flow of thermoplastic material comprises for each flow a circumferentially arranged single inlet, and circumferentially arranged dividing means to divide the inlet flow into at least eight equal part flows which in a downstream part of the die are united to one film-forming flow, and in which die the dividing means comprises at least two parts in each of which the flow is divided into two branches of part-flows and in which the die-parts which perform the first dividing and form the first two branches are thermally isolated from the die-parts downstream thereof. In the die the dieparts which comprise the first two branches are independently cooled or heated.

In the patent literature mentioned above, which deals with circumferential dividing of the flows in annular dies, each branch of the dividing is shown in the drawings as forming a circular arc centred on the axis of the die. This is preferable with a view to compactness of the die and in order to make a bore around the axis of the die as wide as possible, but for the sake of completeness it should be mentioned that these branches may be straight, and/or may branch off under an angle different from 90 degrees (as shown e.g. in US-A-2734224, there in connection with flat dies). However, a generally perpendicular branching-out allows a particular compact construction of the die.

As mentioned in the foregoing, the orifice which has been designated as the exit orifice may either form the final exit from the die, or in the case of coextrusion may be an orifice at which the flow of molten polymer material in film form is coextruded with another flow of molten polymer material in film form, after which the combined film-formed flow proceeds to the final exit of the coextrusion die. For details in the arrangement of such coextrusion, reference is made to the above-mentioned WO-A-02/051617 (Rasmussen) the disclosure of which is incorporated by reference. Each embodiment in this publication is applicable to the present invention, when the spiral distribution system disclosed in the publication is substituted by the characteristic features of the present invention.

Alternatively to such types of coextrusion, or in combination herewith, and no matter whether the die is annular or flat, the invention may be carried out as already mentioned, as co-extrusion with use of a feed-block upstream of the location which in the foregoing is designated as the inlet. This feed-block may be separate from the extrusion die or may form an integral part of the latter.

When the die according to the present invention is used for co-extrusion with a feed-block, the cross-section of each of the channels which constitute the dividing system should preferably be generally rectangular, preferably with rounded corners of this cross-section, and preferably widest in the dimension that corresponds to the thickness of the extruded film. These precautions serve optionally to maintain the laminar configuration formed in the feed-block. There is not the same need when the die is used for mono-extrusion, but it is normally advisable to construct the die such that in any case it can be used for co-extrusion with the use of a feed-block.

It should finally be mentioned that a grid may be inserted in the collecting chamber between the slanted edges and the exit orifice, in particular the type of grid consisting of slanted closely spaced, thin lamellae which is disclosed in WO04/094129 (Rasmussen). As explained in this publication this can be very advantageous when extruding polymer materials consisting of blended incompatible polymers.

The invention shall now be described in further detail with reference to the drawings.

Figure 1 is a horizontal view, showing in about 1/4 (when the full sheet is standard A4) of true dimensions one of two clamped-together parts of a flat die in which two components are coextruded by means of a feed-block construction, successive dividing takes place, and the chamber walls, continuing in inserted, screwing vanes, are arranged. The figure also shows a horizontal view of the exit part of the die, which is held to the other two parts by means of bolts.

Except for the two sides of the die, fig. 1 can also represent an annular die composed of cylindrical parts. In this case fig. 1 shows an unfolded cylindrical section of the channel system. Furthermore the drawing can represent an annular die composed of slightly conical parts, in that case being an unfolding of a cylindrical projection of the conical surface on which the channel system is formed.

Fig. 2a shows a vertical section of the upstream parts of the die represented by fig. 1, namely section a-a in fig. 1.

Fig. 2b shows a vertical section of the downstream parts of the die represented by fig. 1, namely section b-b in fig. 1.

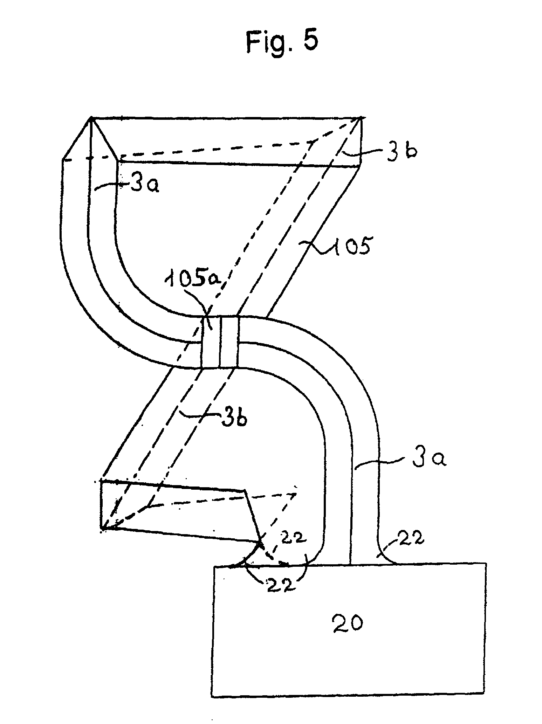

Figures 3 and 4 are perspective views and Fig. 5 is a side view, enlarged in comparison with figures 1 and 2, of three different constructions of inserts which follow immediately after the edges (100) in which the walls of the dividing system end. These inserts comprise vanes which gradually make the interfaces between the part-flows slanted, and make the die-lines in the final product practically horizontal.

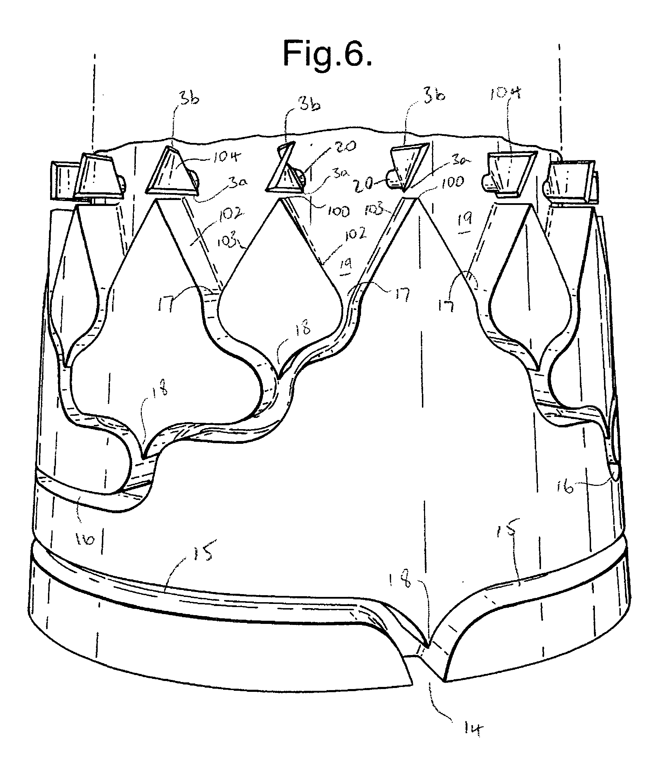

Fig. 6 represents an embodiment of the invention, in which the die is annular, the channel system being formed between two parts with frusto-conical surfaces fitting together. The channel system is milled into the concave surface of one part, and only this part is shown in the drawing. It is represented in a perspective view.

Fig. 7 which is an unfolded circular section, represents an embodiment in which the die is annular and comprises a number of bolted together die-plates, the dividing channel system being formed as circular branches in the surfaces of the plates with bores through the plates at each location where a flow divides. This drawing also shows the special feature that the die-part, in which the material flows until the second step of the circumferentially arranged dividing, is thermally isolated from the die-parts which follow.

In Figures 1, 2a and 2b, (1) and (2) are the clamped together die-parts which comprise an integral feed-block construction (here shown as a simplified construction). The dividing system and the chambers (19) continued in vanes (104), start vertically but screw and end with slanted edges, Exit part (4) comprises the collecting chamber (5) which gradually narrows down to form an exit passageway (6) and the exit orifice (7). The two drawings show three polymer components, A in the middle, B and C on each side thereof, being fed from extruders (not shown) through passageways (8), (9) and (10) through the three slot-formed orifices (11), (12) and (13) to join and form a three-layered common flow in the passageway (14), which is called the inlet above and in the claims.

In the dividing system the layered flow branches out to two part-flows in the channel-branches (15), from which four part-flows are formed in channel-branches (16), after which a further dividing takes place to form eight part-flows in channel-branches (17). In an industrial die it would normally be preferable to end with 16 or 32 part-flows.

Each branch in the last series of branches (17) is so short that it actually is little more than an orifice, and these orifices amount to what, in the foregoing and in the claims, are referred to as the internal orifices. The dividing edges (18) on channel walls where the part-flows change direction about 90 degrees, serve to maintain the layered structure intact.

Immediately downstream of the internal orifices (17) the eight part-flows widen and acquire pronounced sheet form in the chambers (19), the walls of which (102/103) each end in a vertical edge (100) which is perpendicular to the main surfaces of the sheet-formed flows. Immediately following this (in Fig. 1, arranged a few mm away but alternatively touching and optionally supported by the edge) begins an insert, fixed to one of the die-parts (1) or (2).

An insert (104) is shown perspectively in figure 3. Apart from the foot (20) of the insert which fits into a corresponding bore (not shown) in die-part (1) or (2) and is fixed to this part, the insert consists of a thin vane, e.g. about 2 mm thick, which starts with a vertical (if the sheet surfaces are considered horizontal) edge (3a) and gradually becomes more and more slanted to end in the slanted edge (3b).

The connection (22) between the vane and its foot extends only over an upstream, relatively minor part of the total length of the vane, and over the rest of this length there is about one or a few millimetres space between the vane and the adjacent chamber wall. In this space there will occur some transverse shear in the polymer flow, serving to reduce the effect of any stagnation, which may have taken place at the boundary (22) between the vane and its foot.

Furthermore, as it appears from fig. 3, in order to minimize such stagnation in this boundary the change from vane to foot is smooth.

Having left the passageways formed between the vanes, the part flows join in the collecting chamber (5), which narrows down in the zone (5a), proceed through the exit passageway (6) and leave the die as a molten film at the exit orifice (7). At this stage the die-lines formed at the interfaces, where the part-flows have joined, have become practically horizontal and thereby harmless.

Figure 4 is a modification of the insert shown in figure 3. In this construction the inlet edge (3a) of the vane is slanted to one side, and the outlet edge (3b) of the vane is slanted to the other side, thereby the die-line is very efficiently rotated. The edge which ends the labyrinthine dividing channel system is shown as a vertical line (100). This line will also represent the interface between the part-streams (the die-line) before the rotation. The interrupted line (101) shows a position where the vane is generally parallel with the edge (100). At this position the die-line is already essentially rotated.

Fig. 5 is another modification of the insert shown in fig. 3. In this construction the upstream edge (3a) has a kind of S-shape, which taken as an average is slanting to one side, while the downstream end (105) with edge (3b) slants to the other side. The vane at its upstream edge has an incision (105a) into which the downstream edge (100) of the chamber wall and a few mm of this chamber wall fit. Thereby the chamber wall helps to support the insert with the vane. Such support can be required if the polymer flow has a particular high melt viscosity. The s-shape has the function of avoiding stagnation in the space between the chamber wall at (100) and the vane at (3a). For a similar purpose, the edge (3a) on the insert shown in fig. 3, may fit into a groove along the edge of the chamber wall, or the edge (100) may fit into a groove along the upstream end of the vane.

Two - or in exceptional cases more - vanes may be arranged in-line one after the other to enhance the flattening of the die-lines.

In figure 1 the chambers (19) are shown widening out gradually and smoothly. This is preferable with a view to even distribution and, in the case of co-extrusion with the feed-block, for the maintenance of the multi-layered flow structure. If the chamber system shown is used for mono-extrusion only, the chamber (19) may be shallower near its middle so as to provoke a higher flow velocity near the inserts, with the effect that the latter become more efficient and spread out the die-lines over a wider area. However, if the chamber system shown is used for co-extrusion with a feed-block, such constraint at the middle of the chamber (19) may disrupt the multi-layered flow structure in chamber (5).

In the design of the vane and/or the termination of the chamber walls ending in the edge (100) it is important to avoid "pockets" or in other words abrupt and big changes in the directions of flow adjacent to this chamber wall or insert, since such changes can result in a tendency to stagnation. As shown in fig. 1, the biggest angular difference between the machine direction and the flow adjacent to the vane, may conveniently be around 15-20**°,** and similarly, the biggest angular difference between the machine direction and the flow adjacent to the downstream part, near edge (100) of the chamber wall may conveniently also be around 15-20 °. To enable this, the chamber (19) is preferably designed in the asymmetrical manner shown in fig. 1, in which the internal orifices (17) are regularly arranged in pairs with a distance between the two orifices in a pair being much smaller than the distance between the pairs. Another preferable precaution in the design is that the angle which the slanted downstream edges (3b) of the vanes form with a line perpendicular on the main surfaces of the sheet formed flow in chamber (19) should not be bigger than about 45°. In fig. 5 it is shown to be about 30 °, which is more preferable. Similarly, if the laying flat of die-lines is not based on the use of inserted vanes, but on a gradual slanting of the walls which separate the chambers (19) from each other, such slanting should preferably not exceed about 45 °, and more preferably not exceed about 30 °. These precautions all have the purpose to avoid stagnation.

The two die-parts (1) and (2) seal tightly against each other on the recesses (23), and material which accidentally leaks, will leave the die through drain holes (24). Bores (25) are for the many bolts which keep the die parts (1), (2) and (4) together.

In fig. 6, the reference numerals have the same significance as in fig. 1, and the functioning of the die can easily be understood from the above description. For the sake of simplification the gradually widening chambers (19) are shown as having a symmetrical shape but it should be understood that it preferably should have an asymmetrical shape, similar to the die shown in Fig. 1, and as described in connection with this drawing.

In fig. 7, the construction is an improvement of the so-called "pancake die" described e.g. in US-A-4492549, see especially figs. 2 and 3. In this patent a circumferential dividing, there called labyrinthine dividing, takes place while the polymer flow moves from disc to disc, in channels milled into the surfaces of clamped together discs and through bores passing through the discs. In this embodiment of the present invention the arrangement is similar, but while the circumferential dividing in the mentioned US patent is followed by spiral equalization, it now is followed by the turning over and laying down of the die-lines.

In the present drawings circular discs forming die-parts (106), (107), (108) and (109) are bolted together (not shown).

As already mentioned, Fig. 7 is an unfolded circular section. Fig. 7 shows the channel system from inlet to exit, but for the sake of simplification only about half of the circular, transverse dimension of the flow-route is shown. This flow-route starts with the inlet (14), branches out into two partstreams (15), then into four part-streams (16) and then into eight part-streams (110) ending in 16 internal orifices (17). The part-flows widen out in the 16 chambers (19) and join after the edge (100) or vanes (104). The flow continues in a deep, circular collecting chamber (5), which gradually becomes shallow and ends in passageway (6) with the exit orifices (7). In principle this flow arrangement is identical with the arrangement shown in fig. 1. The vanes (104) are shown as dotted lines and abut the edges 100 in this arrangement.

From the beginning and downstream to the internal orifices (17), the channels are formed in and between the above-mentioned clamped together discs, and from the internal orifices (17) downstream to the exit, the flow arrangement is formed between two generally cylindrical parts, which are both bolted onto the disc (109).

The direct contact between these different die-parts is limited to protrusions at the boundaries of the channels, while there are spaces for drainage (111) covering the rest of the surfaces between these die-parts. The channels to lead the drained material out of the die are not shown. Such draining is a normal precaution in order to avoid accidental leakage causing overloading of the bolts which hold the die-parts together.

It is noted that the channel walls are not supplied with dividing edges like edges (18) in fig. 1. In case the die is constructed for coextrusion with feed-block, such edges are required to obtain a sharp dividing of the flows, but they are not advantageous when the flow consists of a single component.

Fig. 7 furthermore illustrates the special feature that the die-parts, in which the material flows until the second step of the circumferential dividing, are thermally isolated from the die-parts downstream thereof. For this purpose there is a substantial air-space (113) between disc (107) and disc (108). Unless means for ventilation are installed as described below, a solid isolating material within this space may further be provided. The connections between the two channel arms in disc (108) are established through two pipe-like protrusions (114), and to nest disc (108) safely on disc (107) there is at least one but preferably more knobs (115) either on disc (107) or on disc (108).

Fig. 7 also illustrates the feature that the die-parts, which are upstream of the second step of circumferential dividing and are thermally isolated from the downstream parts, are independently heated or cooled. The independent heating is not shown, but there is shown one of a number of channels (bores) (112) for air-cooling. This can simply take place by the natural draft which due to the heating of the air by the hot discs (106) and (107), takes in air from the bottom of bores (112) and send it out through air-space (113). A shutter (116) can be adjusted to control this air-flow. In the drawing this is shown in closed position, but it can be fully or partially opened. The independent heating or cooling can serve to secure an adequate distribution of thermoplastic material between the different part-flows, since this distribution to some extent depends on die temperatures and temperatures in the molten polymer material. In the die construction which is shown in fig. 6, it can also be advantageous to take similar precautions, namely to make the die-part in which the material flows through the second step of the circumferential dividing, thermally isolated from the following die-parts, and to provide the former with separate heating and/or cooling.

Fig. 7 can be considered modified in such manner that the channel parts downstream of the internal orifices (17) are substituted by a spiral distribution system as shown e.g. in figs. 2 and 3 of US-A-4492549.

In the general patent description above it is mentioned, that when the main aspect of the present invention is practised (i.e. the precautions and means to make distinct die-lines and lay them flat) and when the coextrusion die is an annular die which delivers the film in tubular form from its exit orifice, the major sheet surfaces at the flow-stage where the sheets meet the edges (100) can be either cylindrical or conical, or the flow can be generally radially directed. Fig. 6 illustrates the situation that the said sheet surfaces are conical, and since the dieparts are only very slightly conical, it can also be understood to illustrate the situation that the sheet surfaces are cylindrical. To illustrate the situation that the flow at this stage is radially directed, fig. 1 can be considered changed to a circular design, in which e.g. the row of internal orifices (17) and the row of edges (100) each become circular arrays, with the flow taking place either outwardly or inwardly with respect to the axis of the annular die.

## Claims

1. An method of extruding molten thermoplastic polymer material through an extrusion die in the manufacture of a polymer film, the die having one or more inlets (14) for one or more inlet-flows of the material and an exit orifice (7) for a film-formed exit flow of the material, the molten material being divided before or after the passage through the inlet or inlets into at least four part-flows, each being conducted to an internal channel orifice (17), these at least four internal orifices having the same distances from the exit, whereby between said internal orifices and said exit the part-flows are united and the flowing material is manipulated to equalise the flow velocity and at least partly eliminate die-lines formed at the interfaces where the part-flows meet, and in which method the manipulation comprises immediately downstream of said internal orifice (17) gradually widening each part-flow until the part-flows, each in the form of a molten sheet structure (19), meet and merge with each other, this merging taking place over an edge (100) on the ends of die-walls which separate the part-flows from one another, these edges all having the same distance from the exit (7), after which the combined stream consisting of merged part-streams proceeds through a wide collecting chamber (5) which has a gradually (5a) reducing gap and ends in the film-forming exit orifice (7), **characterised in that** either the edges (100) over which the part-flows join are slanted to form a lateral displacement over the length of each edge, or the joining is immediately followed by helical rotation of the molten polymer material at and adjacent to the interface between each pair of adjacent part-flows, generally around an axis through the middle of the interface, by means of thin vanes which are slanted to one side at their downstream end (3b) and either are slanted to the opposite side or are generally perpendicular to the main surfaces of the flows at their upstream end (3a).

2. A method according to claim 1, **characterised in that** in the vicinity of the edges (100) where the part-flows join the die-walls of the chambers (19) which define the part-flows are helically shaped, starting generally vertical with respect to the major surfaces of the sheet-formed part-flows and gradually becoming more and more slanted.

3. A method according to claim 1 or 2, **characterised in that** the vanes for said helical rotation are constructed as inserts in the die.

4. A method according to any of the preceding claims, **characterised in that** the slanting is adapted to spread out each significant die-line generally evenly over a film width no less than about 5 mm, preferably no less than about 10 mm, and still more preferably no less than about 15 mm.

5. A method according to any of the preceding claims, **characterised in that** there are at least 8, and preferably at least 16, part-flows.

6. A method according to any of the preceding claims, **characterised in that** the distance between adjacent edges (3b) is no longer than about 20 cm, preferably no longer than about 15 cm, and still more preferably no longer than about 10 cm.

7. A method according to any of the preceding claims, **characterised in that** at the slanted edges (100) on the ends of the die-walls which separate the part-flows from one another or on the downstream end (3b) of the slanted vanes, as the case may be, the thickness of the molten sheet structure (19) is no less than about 10 mm, preferably no less than about 20 mm, and still more preferably no less than about 25 mm.

8. A method according to any of the preceding claims **characterised in that** adjacent to the edge-portions of each part-flow the helical shape of the die-wall or vane is rounded to avoid stagnation of the polymer material.

9. A method according to any of the preceding claims, **characterised in that** immediately following the internal orifices (17) and downstream to the row of edges (100) where the partflows meet, the widening of the partflows takes place smoothly, whereby the angle between the boundaries (102 and 103) of each partflow as measured from position to position in sections drawn perpendicular to the machine direction of the die, is generally around or lower than 60°.

10. A method according to claim 9, **characterised in that** the row of internal orifices (17) are regularly arranged in pairs, whereby the individual orifices in each pair are closer to each other than the distance between adjacent pairs and in each partflow the flow boundary (102) which has been formed by the last dividing step, follows a path which is closer to the machine direction of the die than the path followed by the opposite flow boundary (103), and further **characterised in that** the change of flow directions to establish the lateral displacement or rotation is limited to angles of about or lower than 45 ° and that the slanted edges (100) on the ends of the die-walls or the slanted downstream edges (3b) on the vanes, as the case may be, form an angle to the main surfaces of the sheet surfaces, which is about or lower than 45°.

11. A method according to any of the preceding claim, **characterised in that** the die is a flat die which delivers the component in flat form from its exit orifice.

12. A method according to any of claims 1 to 10, **characterised in that** the die is an annular die which delivers the component in tubular form from its exit orifice.

13. A method according to claim 12, **characterised in that** the major sheet surfaces at the flow-stage where the sheets meet the edges (100), are tubular and formed around the axis of the annular die.

14. A method according to claim 12, **characterised in that** the major sheet surfaces at the flow-stage where the sheets meet the edges (100), are conical and formed around the axis of the annular die.

15. A method according to claim 12, **characterised in that** the flow at the stage where the sheets meet the edges (100) is generally radially directed.

16. A method according to any of claims 12 to 15, **characterised in that** the molten material is divided in a circumferentially arranged system between the inlet (19) or inlets and the internal orifices (17).

17. A method according to claim 16, **characterised in that** the cross-section of each of the channels which constitute the circumferentially arranged dividing system is generally rectangular, preferably with rounded corners, and preferably widest in the dimension which corresponds to the thickness of the extruded film.

18. A method according to claim 16 or 17, **characterised in that** the passageways for the molten component mainly are formed in die-plates (1, 2) which are clamped together e.g. by bolts.

19. A method according to any of claims 16 to 18 in which there is only one inlet flow and one inlet **characterised in that** the die-part(s) in which the material flows upstream of the second step of the labyrinthine dividing takes place, is or are thermally isolated from the die-parts downstream thereof.

20. A method according to claim 19, **characterised in that** said die-part is independently cooled or heated.

21. A method according to any of the preceding claims **characterised in that** the film-formed polymer material leaves the die at the said exit.

22. A method according to any of the preceding claims **characterised in that** the film-formed polymer material is co-extruded with at least one further component at said exit.

23. A method according to any of the preceding claims **characterised in that** the component which enters the inlet or inlets is multi-layered, the multi-layer structure being formed in a feed-block (8-14).

24. A method according to claim 23, **characterised in that** the feed-block is an integral part of the extrusion die.

25. Extrusion die for manufacturing films of thermoplastic polymer, comprising one or more inlets (14) for one or more inlet-flows, an exit orifice (7) from which a film-formed flow of material exits, dividing means upstream or downstream from the inlet or inlets for dividing the flow into four or more part-flows, at least four passageways for the said four or more part-flows and internal orifices (17) at the downstream ends of each of the passageways, said internal orifices being equidistant from the exit orifice, wherein between said internal orifices and the exit orifice the at least four passageways for the part-flows widen along lateral die-walls until they meet the adjacent passageways at edges (100) formed where said lateral die-walls end, said edges being equidistant from the exit orifice, **characterised in that** either the edges are slanted to form a lateral displacement over the length of each edge or downstream of each edge a vane is located which is shaped to impose a helical flow of molten polymer material at and adjacent to the interface between adjacent part-flows.

26. Extrusion die according to claim 25 which comprises the said vanes and each of the vanes are slanted to one side at their downstream ends (3b).

27. Extrusion die according to claim 26 in which the vanes are either slanted to the opposite side at their upstream ends (3a), or are generally perpendicular at their upstream ends to the die-walls forming the main surfaces of the flows.

28. Extrusion die according to claim 26 or 27 in which the vanes are each mounted on a foot (20) which is fitted into an aperture formed in the die-wall of the die-part.

29. Extrusion die according to any of claims 25 to 28 in which the depth of the passageways where they join is no less than about 10 mm, preferably no less than 20 mm, more preferably no less than 25 mm.

30. Extrusion die according to any of claims 25 to 29 in which the distance between each slanted edge or vane, as the case may be, is no higher than 20 cm, preferably no higher than 15 cm, more preferably no higher than 10 cm.

31. Extrusion die according to any of claims 25 to 30 in which the slant of the edges or the downstream edges of the vanes, as the case may be, is at an angle of around 30° to perpendicular to the die-walls forming the main surfaces of the flows.

32. Extrusion die according to any of claims 25 to 31 in which the dividing means divide the flow into at least eight, preferably at least 16 part-flows, and in which there are a corresponding number of passageways for the said part-flows.

33. Extrusion die according to any of claims 25 to 32 which is a flat die for delivering a flat film of material from the exit orifice.

34. Extrusion die according to any of claims 25 to 32 which is an annular die which delivers a tubular film of material from the exit orifice.

35. Extrusion die according to claim 34 in which the flow passageway immediately downstream and upstream of the die-wall edges (100) has die-walls which are circular cylindrical.

36. Extrusion die according to claim 34 in which the flow passageway immediately downstream and upstream of the die-wal edges (100) has die-walls which have conical surfaces coaxial with the die axis.

37. Extrusion die according to claim 34 in which the flow passageway immediately downstream and upstream of the die-wall edges (100) has generally radially arranged die-walls.

38. Extrusion die according to any of claims 34 to 37 which has a single inlet and in which the dividing means comprises at least two parts in each of which the flow is divided into two branches of part-flows and in which the die-parts which perform the first dividing and form the first two branches are thermally isolated from the die-parts downstream thereof.

39. Extrusion die according to any of claims 25 to 38 which comprises a coextrusion inlet for coextrudable thermoplastic polymer.

40. Extrusion die according to claim 39 in which the coextrusion inlet is downstream of the said exit orifice.

41. Extrusion die according to claim 39 in which the coextrusion inlet is upstream of the said inlets (14).

42. Extrusion die according to claim 41 in which the coextrusion inlet and said inlet are formed in a feedblock, which is an integral part of the extrusion die.

43. Extrusion die according to any of claims 25 to 42 which comprises a collecting chamber between said edges (100) or vanes, as the case may be, and the exit orifice, and the collecting chamber contains a grid of spaced thin lamellae.

44. Apparatus comprising an extrusion die according to any of claims 25 to 43 and means for hauling off the film-formed product, and, optionally, a feed-block upstream of the extrusion die through which molten polymer is fed to the inlet, and, optionally through which coextrudable molten polymer material is fed to said inlet.

## Patentansprüche

1. Verfahren zur Extrusion eines geschmolzenen thermoplastischen Polymermaterials durch eine Extrusionsform bei der Herstellung einer Polymerfolie, wobei die Form einen oder mehrere Einlässe (14) für einen oder mehrere Einlassströme des Materials und eine Ausgangsöffnung (7) für einen zu einer Folie geformten Ausgangsstrom des Materials aufweist, wobei das geschmolzene Material vor oder nach dem Durchgang durch den Einlass oder die Einlässe in zumindest vier Teilströme geteilt wird, wovon jeder zu einer Innenkanalöffnung (17) geleitet wird, wobei diese zumindest vier inneren Öffnungen die gleichen Abstände vom Ausgang aufweisen, wobei die Teilströme zwischen den inneren Öffnungen und dem Ausgang vereinigt werden und das fließende Material so beeinflusst wird, dass die Fließgeschwindigkeit ausgeglichen wird und Formlinien, die an den Grenzflächen, an denen sich die Teilströme treffen, gebildet werden, zumindest teilweise beseitigt werden, bei welchem Verfahren die Beeinflussung unmittelbar stromabwärts der inneren Öffnung (17) ein allmähliches Verbreitern jedes Teilstroms umfasst, bis die Teilströme, jeder in der Form eines geschmolzenen Bogenaufbaus (19), einander treffen und miteinander verschmelzen, wobei dieses Verschmelzen über einer Kante (100) an den Enden von Formwänden, die die Teilströme voneinander trennen, stattfindet, wobei diese Kanten alle den gleichen Abstand vom Ausgang (7) aufweisen, wonach der kombinierte Strom, der aus verschmolzenen Teilströmen besteht, durch eine weite Sammelkammer (5) mit einem sich allmählich (5a) verringernde Spalt weiterfließt und in der folienbildenden Ausgangsöffnung (7) endet, **dadurch gekennzeichnet, dass** entweder die Kanten (100), über die sich die Teilströme vereinden, abgeschrägt sind, um eine seitliche Verschiebung über die Länge jeder Kante zu bilden, oder der Verbindung durch dünne Leitflügel, die an ihrem stromabwärts befindlichen Ende (3b) zu einer Seite abgeschrägt sind und an ihrem stromaufwärts befindlichen Ende (3a) entweder zur entgegengesetzten Seite abgeschrägt sind oder zu den Hauptflächen der Ströme im Allgemeinen senkrecht verlaufen, unmittelbar eine schraubenförmige Drehung des geschmolzenen Polymermaterials an und neben der Grenzfläche zwischen jedem Paar von benachbarten Teilströmen, im Allgemeinen um eine Achse durch die Mitte der Grenzfläche, folgt.

2. Verfahren nach Anspruch 1, **dadurch gekennzeichnet, dass** in der Umgehung der Kanten (100), an denen sich die Teilströme verbinden, die Formwände der Kammern (19), die die Teilströme definieren, Schraubenförmig geformt sind, wobei sie im Allgemeinen senkrecht in Bezug auf die Hauptflächen der zu einem Bogen geformtten Teilströme beginnen und allmählich immer schräger werden.

3. Verfahren nach Anspruch 1 oder 2, **dadurch gekennzeichnet, dass** die Leitflügel für die schraubenförmige Drehung als Einsätze in die Form aufgebaut sind.

4. Verfahren nach einem der vorhergehenden Ansprüche, **dadurch gekennzeichnet, dass** die Abschrägung dazu geeignet ist, jede deutliche Formlinie im Allgemeinen gleichmäßig über eine folienbreite von nicht weniger als etwa 5 mm, vorzugsweise nicht weniger als etwa 10 mm, und insbesondere nicht weniger als etwa 15 mm zu verteilen.

5. Verfahren nach einem der vorhergehenden Ansprüche, **dadurch gekennzeichnet, dass** es zumindest 8 und vorzugsweise zumindest 16 Teilströme gibt.

6. Verfahren nach einem der vorhergehenden Ansprüche, **dadurch gekennzeichnet, dass** der Abstand zwischen benachbarten Kanten (3b) nicht länger als etwa 20 cm, vorzugsweise nicht länger als etwa 15 cm, und insbesondere nicht länger als etwa 10 cm ist.

7. Verfahren nach einem der vorhergehenden Ansprüche, **dadurch gekennzeichnet, dass** die Dicke des geschmolzenen Bogenaufbaus (19) an den abgeschrägten Kanten (100) an den Enden der Formwände, die die Teilströme voneinander trennen, beziehungsweise am stromabwärts befindlichen Ende (3b) der abgeschrägten Leitflügel nicht geringer als etwa 10 mm, vorzugsweise nicht geringer als etwa 20 mm, und insbesondere nicht geringer als etwa 25 mm ist.

8. Verfahren nach einem der vorhergehenden Ansprüche, **dadurch gekennzeichnet, dass** die schraubenförmige form der Formwand oder des Leitflügels neben den Kantenabschnitten jedes Teilstroms abgerundet ist, um eine Stockung des Polymermaterials zu vermeiden.

9. Verfahren nach einem der vorhergehenden Ansprüche, **dadurch gekennzeichnet, dass** die Verbreiterung der Teilflüsse unmittelbar im Anschluss an die inneren Öffnungen (17) und stromabwärts von der Reihe von Kanten (100), an denen sich die Teilströme treffen, sanft stattfindet, wobei der in Schnitten, die senkrecht zur Maschinenrichtung der Form gezeichnet sind, von Position zu Position gemessene Winkel zwischen den Grenzen (102 und 103) jedes Teilstroms im Allgemeinen um 60° oder weniger beträgt.

10. Verfahren nach Anspruch 9, **dadurch gekennzeichnet, dass** die Reihe von inneren Öffnungen (17) regelmäßig in Paaren angeordnet ist, wobei die einzelnen Öffnunggen in jedem Paar näher aneinander liegen, als der Abstand zwischen benachbarten Paaren ist, und in jedem Teilstrom die Stromgrenze (102), die durch den letzten Teilungsschritt gebildet wurde, einem Weg folgt, der näher an der Maschinenrichtung der Form liegt, als der Weg, dem die entgegengesetzte Flussgrenze (103) folgt, und ferner **dadurch gekennzeichnet, dass** die Voränderung der Fließrichtungen, um die seitliche Verschiebung oder Drehung herzustellen, auf Winkel von etwa 45° oder weniger beschränkt ist, und dass die abgeschrägten Kanten (100) an den Enden der Formwände beziehungsweise die abgeschrägten stromabwärts befindlichen Kanten (3b) an den Leitflügeln einen Winkel zu den Hauptflächen der Bogenflächen bilden, der etwa 45° oder weniger beträgt.

11. Verfahren nach einem der vorhergehenden Ansprüche, **dadurch gekennzeichnet, dass** die Form eine flache Form ist, die die Komponente von ihrer Ausgangsöffnung in einer flachen Form liefert.

12. Verfahren nach einem der Ansprüche 1 bis 10, **dadurch gekennzeichnet, dass** die Form eine ringförmige Form ist, die die Komponente von ihrer Ausgangsöffnung in einer röhrenförmige Form liefert.

13. Verfahren nach Anspruch 12, **dadurch gekennzeichnet, dass** die Hauptbogenflächen im Fließstadium, in dem die Bögen auf die Kanten (100) treffen, röhrenförmig und um die Achse der ringförmigen Form geformt sind.

14. Verfahren nach Anspruch 12, **dadurch gekennzeichnet, dass** die Hauptbogenflächen im Fließstadium, in dem die Bögen auf die Kanten (100) treffen, kegelförmig und um die Achse der ringförmigen Form geformt sind.

15. Verfahren nach Anspruch 12, **dadurch gekennzeichnet, dass** der Fluss in dem Stadium, in dem die Bögen auf die Kanten (100) treffen, im Allgemeinen radial gerichtet ist.

16. Verfahren nach einem der Ansprüche 12 bis 15, **dadurch gekennzeichnet, dass** das geschmolzene Material zwischen dem Einlass (19) oder den Einlässen und den inneren Öffnungen (17) in ein umfänglich angeordnetes System geteilt wird.

17. Verfahren nach Anspruch 16, **dadurch gekennzeichnet, dass** der Querschnitt eines jeden der Kanäle, die das umfänglich angeordnete Teilungssystem bilden, im Allgemeinen rechteckig ist, vorzugsweise mit abgerundeten Ecken, und vorzugsweise am breitesten in der Ausdehnung, die der Dicke der extrudieren Folie entspricht.

18. Verfahren nach Anspruch 16 oder 17, **dadurch gekennzeichnet, dass** die Durchgänge für die geschmolzene Komponente hauptsächlich in Formplatten (1, 2) gebildet sind, die z.B. durch Schrauben aneinander geklemmt sind.

19. Verfahren nach einem der Ansprüche 16 bis 18, wobei nur ein Einlassstrom und ein Einlass vorhanden sind, **dadurch gekennzeichnet, dass** der Formteil (die Formteile), worin die Materialflüsse stromaufwärts des zweiten Schritts der labyrinthartigen Trennung stattstattfinden, von den stromabwärts davon befindlichen Formteilen wärmeisoliert ist (sind).

20. Verfahren nach Anspruch 19, **dadurch gekennzeichnet, dass** der Formteil unabhängig gekühlt oder erhitzt wird.

21. Verfahren nach einem der vorhergehenden Ansprüche, **dadurch gekennzeichnet, dass** das zu einer Folie geformte Polymermaterial die Form am Ausgang verlässt.

22. Verfahren nach, einem der vorhergehenden Ansprüche, **dadurch gekennzeichnet, dass** das zu einer Folie geformte Polymermaterial am Ausgang mit zumindest einer anderen Komponente coextrudiert wird.

23. Verfahren nach einem der vorhergehenden Ansprüche, **dadurch** gekennnzeichnet, dass die Komponente, die den Einlass oder die Einlässe betritt, mehrschichtig ist, wobei der Mehrschichtaufbau in einem Feedblock (8 bis 14) gebildet wird.

24. Verfahren nach Anspruch 23, **dadurch gekennzeichnet, dass** der Feedblock ein einstückiger Teil der Extrusionsform ist.

25. Extrusionsform zur Herstellung von Folien aus einem thermoplastischen Polymer, umfassend einen oder mehrere Einlässe (14) für einen oder mehrere Einlassströme, eine Ausgangsöffnung (7), aus der ein zu einer Folie geformter Materialstrom austritt, ein Teilungsmittel stromaufwärts oder stromabwärts vom Einlass oder von den Einlässen, um den Strom in vier oder mehr Teilströme zu teilen, zumindest vier Durchgänge für die vier oder mehr Teilströme, und innere Öffnungen (17) an den stromabwärts befindlichen Enden eines jeden der Durchgänge, wobei sich die inneren Öffnungen in gleichen Abständen von der Ausgangsöffnung befinden, wobei sich die zumindest vier Durchgänge für die Teilströme zwischen den inneren Öffnungen und der Ausgangsöffnung entlang seitlicher Formwände verbreitern, bis sie die benachbarten Durchgänge an Kanten (100) treffen, die dort gebildet sind, wo die seitlichen Formwände enden, wobei sich die Kanten in gleichen Abständen von der Ausgangsöffnung befinden, **dadurch gekennzeichnet, dass** entweder die Kanten abgeschrägt sind, um eine seitliche Verschiebung über die Länge jeder Kante zu bilden, oder sich stromabwärts einer jeden Kante ein Leitflügel befindet, der so geformt ist, dass er an und neben der Grenzfläche zwischen benachbarten Teilströmen einen schraubenförmigen Strom des geschmolzenen Polymermaterials erzwingt.

26. Extrusionsform nach Anspruch 25, die die Leitflügel umfasst, wobei jeder der Leitflügel an seinem stromabwärts befindindlichen Ende (3b) zu einer Seite abgeschrägt ist.

27. Extrusionsform nach Anspruch 26, wobei die Leitflügel an ihren, stromaufwärts befindlichen Enden (3a) entweder zur entgegengesetzten Seite abgeschrägt sind oder an ihren stromaufwärts befindlichen Enden im Allgemeinen senkrecht zu den Formwändan, die die Hauptflächen der Ströme bilden, verlaufen.

28. Extrusionsform nach Anspruch 26 oder 27, wobei die Leitflügel jeweils an einem Fuß (20) angebracht sind, der in eine Öffnung eingesetzt ist, die in der Formwand des Formteils gebildet ist.

29. Extrusionsform nach einem der Ansprüche 25 bis 28, wobei die Tiefe der Durchgänge dort, wo sie sich verbinden, nicht geringer als etwa 10 mm, vorzugsweise nicht geringer als 20 mm, und insbesondere nicht geringer als 25 mm ist.

30. Extrusionsform nach einem der Ansprüche 25 bis 29, wobei der Abstand zwischen jeder abgeschrägten Kante beziehungsweise jedem Leitflügel nicht größer als 20 cm, vorzugsweise nicht größer als 15 cm, und insbesondere nicht größer als 10 cm ist.

31. Extrusionsform nach einem der Ansprüche 25 bis 30, wobei die Abschrägung der Kanten beziehungsweise der stromabwärts befindlichen Kanten der Leitflügel in einem Winkel von etwa 30 ° bis zu senkrecht zu den Formwänden, die die Hauptflächen der Ströme bilden, liegt.

32. Extrusionsform nach einem der Ansprüche 25 bis 31, wobei das Teilungsmittel den Strom in zumindest 8 und vorzugsweise zumindest 16 Teilströme teilt, und wobei eine entsprechende Anzahl von Durchgängen für die Teilströme vorhanden ist.

33. Extrusionsform nach einem der Ansprüche 25 bis 33, die eine flasche Form ist, um eine Flache Folie des Materials aus der Ausgangsöffnung zu liefern.

34. Extrusionsform nach einem der Ansprüche 35 bis 32, die eine ringförmige Form ist, welche ein röhrenförmiges Folienmaterial aus der Ausgangsöffnung liefert.

35. Extrusionsform nach Anspruch 34, wobei der Fließdurchgang unmittelbar stromabwärts und stromaufwärts der Formwandkanten (100) Formwände aufweist, die rund zylinderförmig sind.

36. Extrusionsform nach Anspruch 34, wobei der Fließdurchgang unmittelbar stromabwärts und stromaufwärts der Formwandkanten (100) Formwände aufweist, die kegelförmige Flächen aufweisen, welche gleichachsig mit der Formachse verlaufen.

37. Extrusionsform nach Anspruch 34, wobei der Fließdurchgang unmittelbar stromabwärts und stromaufwärts der Formwandkanten (100) im Allgemeinen radial angeordnete Formwände aufweiset.

38. Extrusionsform nach einem der Ansprüche 34 bis 37, die einen einzelnen Einlass aufweist, und wobei das Teilungsmittel zumindest zwei Teile umfaßt, wobei der Strom in jeden davon in zwei Arme von Teilströmen geteilt wird, und wobei die Formteil, die die erste Teilung durchführen und die ersten beiden Arme bilden, von den stromabwärts davon befindlichen Formteilen wärmeisoliert sind.

39. Extrusionsform nach einem der Ansprüche 25 bis 38, die einen Coextrusionseinlasa für ein coextrudierbares thermoplastisches Polymer umfasst.

40. Extrusionsform nach Anspruch 39, wobei sich der Coextrusionseinlass stromabwärts der Ausgangsöffnung befindet.

41. Extrusionsform nach Anspruch 39, wobei sich der Coextrusionseinlass stromaufwärts der Einlässe (14) befindet.

42. Extrusionsform nach Anspruch 41, wobei der Coextrusionseinlass und der Einlass in einem Feedblock gebildet sind, der ein einstückiger Teil der Extrusionsform ist.

43. Extrusionsform nach einem der Ansprüche 25 bis 42, die zwischen den Kanten (100) beziehungsweise den Leitflügelen und des Ausgangsöffnung eine Sammelkammer umfasst, wobei die Sammelkammer ein Gitter aus beabstandeten dünnen Lamellen enthält.

44. Vorrichtung, umfassend eine Extrusionsform nach einem der Ansprüche 25 bis 43 und ein Mittel zum Abführen des zu einer Folie geformten Produkts, und optional einen Feedblock stromaufwärts der Extrusionsform, wodurch ein geschmolzenes Polymer zum Einlass geführt wird, und wodurch optional ein coextrudierbares geschmolzenes Polymermaterial zum Einlass geführt wird.

## Revendications

1. Procédé d'extrusion d'un matériau polymère thermoplastique fondu à travers une filière d'extrusion dans la fabrication d'un film polymère, la filière ayant une ou plusieurs entrées (14) pour un ou plusieurs flux d'admission du matériau et un orifice due sortie (7) pour un flux de sortie formé en film du matériau, le matériau fondu étant divisé avant ou après le passage à travers la ou les entrées en au moins quatre flux partiels, chacun étant conduit à un orifice de canal interne (17), ces au moins quatre orifices internes ayant les mêmes distances de la sortie, par quoi entre lesdits orifices internes et ladite sortie, les flux partiels sont unis et le matériau d'écoulement est manipulé pour égaliser la vitesse d'écoulement et pour élimine au moins partiellement des lignes de filière formées aux interfaces où les flux partiels se rencontrent, et dans ce procédé, la manipulation comprend directement en aval dudit orifice interne (17) un élargissement progressif de chaque flux partie jusqu'à ce que les flux partiels, chacune sous la forme d'une structure de feuille fondue (19), se rencontrent et s'entremêlent, cet entremêlement ayant lieu sur un bord (100) sur les extrémités des parois de filière qui séparent les flux partiels les uns des autres, ces bords ayant tous la même distance de la sortie (7), après quoi l'écoulement combiné consistant en flux partiels entremêlés avance à travers une chambre de collecte large (5) qui présente un espace se réduisant progressivement (5a) et se termine dans l'orifice de sortie de formation de film (7), **caractérisé en ce que** soit les bords (100) sur lesquels les flux partiels se joignent sont inclinés pour former un déplacement latéral sur la longueur de chaque bord, soit la jonction est suivie directement d'une rotation hélicoïdale du matériau de polymère fondu et adjacent à l'interface entre chaque paire de flux partiels adjacents, généralement autour d'un axe à travers le milieu de l'interface, par des aubes minces qui sont inclinées vers un côté à leur extrémité aval (3b) et sont soit inclinées vers le côté opposé soit sont généralement perpendiculaires aux surfaces principales des flux à leur extrémité amont (3a).

2. Procédé selon la revendication 1, **caractérisé en ce qu'**au voisinage des bords (100) où les flux partiels se joignent, les parois de filière des chambres (19) qui définissent les flux partiels sont configurées hélicoïdalement, commençant généralement verticalement par rapport aux surfaces majeures des flux partiels formés en feuille et devenant progressivement de plus en plus inclinées.

3. Procédé selon la revendication 1 ou 2, **caractérisé en ce que** les aubes pour ladite rotation hélicoïdale sont construites comme des inserts dans la filière.

4. Procédé selon l'une quelconque des revendications précédentes, **caractérisé en ce que** ladite inclinaison est apte à élargir chaque ligne de filière significative généralement uniformément sur une largeur de film non inférieure à environ 5 mm, de préférence non inférieure à environ 10 mm et selon une plus grande préférence non inférieure à environ 15 mm.

5. Procédé selon l'une quelconque des revendications précédentes, **caractérisé en ce qu'**il y a au moins 8, et de préférence au moins 16, flux partiels.

6. Procédé selon l'une quelconque des revendications précédentes, **caractérisé en ce que** la distance entre des bords adjacents (3b) n'est pas plus longue qu'environ 20 cm, de préférence pas plus longue qu'environ 15 cm et selon une plus grande préférence pas plus longue qu'environ 10 cm.

7. Procédé selon l'une quelconque des revendications précédentes, **caractérisé en ce qu'**aux bords inclinés (100) sur les extrémités des parois de filière, qui séparent les flux partiels les uns des autres ou bien sur l'extrémité aval (3b) des aubes inclinées, selon le cas, l'épaisseur de la structure de feuille fondue (19) n'est pas inférieure à environ 10 mm, de préférence non inférieure à environ 20 mm et selon une plus grande préférence non inférieure à environ 25 mm.

8. Procédé selon l'une quelconque des revendications précédente, **caractérisé en ce que** d'une manière adjacente aux portions de bord de chaque flux partie, la forme hélicoïdale de la paroi de filière ou aube est arrondie pour éviter une stagnation du matériau polymère.

9. Procédé selon l'une quelconque des revendications précédentes, **caractérisé en ce que** directement à la suite des orifices internes (17) et en naval de la rangée de bords (100) où les flux partiels se rencontrent, l'élargissement des flux partiels a lieu d'une manière régulière, par quoi l'angle entre les limites (102) et (103) de chaque flux partiel, mesuré de positon en position dans des sections tracées perpendiculairement à la direction d'usinage de la filière, est généralement autour ou inférieur à 80°.

10. Procédé selon la revendication 9, **caractérisé en ce que** la rangée d'orifices internes (17) sont régulièrement agencées par paires, par quoi les orifices individuels dans chaque paire sont plus proches les uns des autres que la distance entre la paire adjacente, et dans chaque flux partiel, la limite d'écoulement (102) qui a été formée par le dernier pas de division, suit un chemin qui est plus proche de la direction d'usinage de la filière que le chemin suivi par la limite d'écoulement opposée (103), et **caractérisé en outre en ce que** le changement des directions d'écoulement pour établir le déplacement latéral ou la rotation est limité à des angles d'environ ou inférieurs à 45°, et **en ce que** les bords inclinés (100) sur les extrémités des parois de filière ou les bords aval inclinés (3b) sur les aubes, selon le cas, forment un angle relativement aux surfaces principales des surfaces de feuille, qui est d'environ ou inférieur à 45°.

11. Procédé selon l'une quelconque des revendications précédente, **caractérisé en ce que** la filière est une filière plate qui distribue le composant sous forme plate de son orifice de sortie.

12. Procédé selon l'une quelconque des revendications 1 à 10, **caractérisé en ce que** la filière est une filière annulaire qui distribue le composant sous forme tubulaire à son orifice de sortie.

13. Procédé selon la revendication 12, **caractérisé en ce que** les surfaces majeures de la feuille à l'étage d'écoulement où la feuille rencontre les bords (100) sont tubulaires et formées autour de l'axe de la filière annulaire.

14. Procédé selon la revendication 12, **caractérisé en ce que** les surfaces majeures de la feuille à l'étage d'écoulement où les feuilles rencontrent les bords (100) sont coniques et formées autour de l'axe de la filière annulaire.

15. Procédé selon la revendication 12, **caractérisé en ce que** l'écoulement à l'étage où les feuilles rencontrent les bords (100) est généralement dirigé radialement.

16. Procédé selon l'une quelconque des revendications 12 à 15, **caractérisé en ce que** le matériau fondu est divisé dans un système agencé circonférentiellement entre l'entrée (19) ou les entrées et les orifices internes (17).

17. Procédé selon la revendication 16, **caractérisé en ce que** la section transversal de chacun des canaux qui forment le système de division agencé circonférentiellement est généralement rectangulaire, de préférence avec des coins arrondis, et de préférence la plus large dans la dimension qui correspond à l'épaisseur du film extrudé.

18. Procédé selon la revendication 16 ou 17 **caractérisé en ce que** les passages pour le composant fondu sont essentiellement formés dans les plateaux matrices (1, 2), qui sont serrés ensemble, par exemple par des boulons.

19. Procédé selon l'une quelconque des revendications 15 à 18, où il y a un seul flux d'entrée et une entrée, **caractérisé en ce que** la ou les parties de filière dans lesquelles le matériau s'écoule en amont du second étage du labyrinthe où la division a lieu, est ou sont thermiquement isolées des parties de filière en aval de celui-ci.

20. Procédé selon la revendication 19, **caractérisé en ce que** la partie de filière est indépendamment refroidie ou chauffée.

21. Procédé selon l'une quelconque des revendications précédentes, **caractérisé en ce que** le matériau de polymère formé en film quitte la filière à ladite sortie.

22. Procédé selon l'une quelconque des revendications précédentes, **caractérisé en ce que** le matériau de polymère formé en film est coextrudé avec au moins un autre composant à ladite sortie.

23. Procédé selon l'une quelconque des revendications précédentes, **caractérisé en ce que** le composant qui entre dans la ou les entrées est à couches multiples, la structure à couches multiples étant formée dans un bloc d'amenée (8-14).

24. Procédé selon la revendication 23, **caractérisé en ce que** le bloc d'amenée constitue une partie intégrale de la filière d'extrusion.

25. Filière d'extrusion pour fabriquer des films en polymère thermoplastique, comprenant une ou plusieurs entrées (14) pour un ou plusieurs flux d'entrée, un orifice de sortie (7) duquel un flux de matériau formé en film sort, des moyens de division en amont ou en aval de la ou des entrées pour diviser le flux en quatre flux partiels ou plus, au moins quatre passages pour lesdits quatre flux partiels ou plus et des orifices internes (17) aux extrémités aval de chacun des passages, lesdites orifices internes étant équidistants de l'orifice de sortie, où entre lesdits orifices internes et l'orifice de sortie, les au moins quatre passages pour les flux partiels s'élargissent le long des parois de filière latérales jusqu'à ce qu'ils se rencontrent aux passages adjacents à des bords (100) formés où lesdites parois de filière latérales se terminent, lesdits bords étant équidistants de l'orifice de sortie, **caractérisée en ce que** soit les bords sont inclinés pour former un déplacement latéral sur la longueur de chaque bord ou en aval de chaque bord, une aube est située qui est configurée pour imparti un écoulement hélicoïdal au matériau de polymère fondu à et d'une manière adjacente à l'interface entre des flux partiels adjacents.

26. Filière d'extrusion selon la revendication 25, qui comprend lesdites aubes, et chacune des aubes sont inclinées vers un côté à leurs extrémités en aval (3b).

27. Filière d'extrusion selon à revendication 26, où les aubes sont soit inclinées vers le côté opposé à leurs extrémités amont (3a) soit sont généralement perpendiculaires à leurs extrémités amont aux parois de filière formant les surfaces principales des flux.

28. Filière d'extrusion selon la revendication 26 ou 27, où les aubes sont chacune montées sur un pied (20) qui est inséré dans une ouverture formée dans la paroi de filière de à partie de filière.

29. Filière d'extrusion selon l'une quelconque des revendications 25 à 28, où la profondeur des passages où ils se rencontrent n'est pas inférieure à environ 10 mm, de préférence non inférieure à 20 mm, selon une plus grande préférence non inférieure à 25 mm.

30. Filière d'extrusion selon l'une quelconque des revendications 25 à 29, où la distance entre chaque bord incliné ou aube, selon le cas, n'est pas supérieure à 20 cm, de préférence non supérieure à 16 cm, selon une plus grande préférence non supérieure à 10 cm.

31. Filière d'extrusion selon l'une quelconque des revendications 25 à 30, où l'inclinaison des bords ou bien les bords en aval des aubes, selon le cas, s'étend selon un angle d'environ 30° à à perpendiculaire aux parois de filière formant les surfaces principales des flux.

32. Filière d'extrusion selon, l'une quelconque des revendications 25 à 31, où les moyens de division divisent le flux en au moins huit, de préférence au moins 16 flux partiels, et où il y a un nombre correspondant de passages pour lesdits flux partiels.

33. Filière d'extrusion selon l'une quelconque des revendications 25 à 32, qui est une filière plate pour distribuer un film de matériau plat à l'orifice de sortie.

34. Filière d'extrusion selon l'une quelconque des revendications 25 à 32, qui est une filière annulaire qui distribue un matériau de film tubulaire de l'orifice de sortie.

35. Filière d'extrusion selon la revendication 34, où le passage d'écoulement directement en aval et en amont des bords (100) de à paroi de filière présentent des parois de filière qui sont circulaires cylindriques.

36. Filière d'extrusion selon la revendication 34, ou le passage d'écoulement directement en aval et en amont des bords (100) de la paroi de filière présente des parois de filière qui ont des surfaces coniques coaxiales à l'axe de filière.

37. Filière d'extrusion selon la revendication 34, où le passage d'écoulement directement en aval et en amont des bords (100) de la paroi de filière possède des parois de filière agencées généralement radialement.

38. Filière d'extrusion selon l'une quelconque des revendications 34 à 37, qui possède une entrée unique et dans laquelle les moyens de division comprennent au moins deux parties dans chacune desquelles le flux est divisé en deux branches de flux partiels, et dans lesquels les parties de filière qui exécutent la première division et forment les premières deux branches sont thermiquement isolées des parties de filière en aval de celles-ci.

39. Filière d'extrusion selon l'une quelconque des revendications 25 à 38, qui comprend une entrée de coextrusion pour un polymère thermoplastique coextrudable.

40. Filière d'extrusion selon la revendication 39, dans laquelle l'entrée de coextrusion est en aval dudit orifice de sortie.

41. Filière d'extrusion selon la revendication 39, où l'entrée de coextrusion est en amont desdites entrées (14).

42. Filière d'extrusion selon la revendication 41, où l'entrée de coextrusion et ladite entrée sont formées dans un bloc d'amenée qui constitue une partie intégrale de la filière d'extrusion.

43. Filière d'extrusion selon l'une quelconque des revendications 25 à 42, qui comprend une chambre de collecté entre lesdits bords (100) ou aubes, selon le cas, et l'orifice de sortie, et la chambre de collecte contient une grille de minces lamelle espacées.

44. Appareil comprenant une filière d'extrusion selon l'une quelconque des revendications 25 à 43 et des moyens pour rouler le produit formé en film et, en option, un bloc d'amenée en amont de la filière d'extrusion à travers lequel le polymère fondu est mené vers l'entrée et, en option, à travers lequel le matériau de polymère coextrudable fondu est amené à ladite entrée.
